# EUROPÄISCHE PATENTSCHRIFT

(11) **EP 2 481 918 B1**
(45) Veröffentlichungstag und Bekanntmachung des Hinweises auf die Patenterteilung: **26.08.2015**
(21) Anmeldenummer: 11152546.5
(22) Anmeldetag: 28.01.2011
(51) Int. Cl.: F03D 7/02

(54) **Verfahren zum Betreiben einer Windenergieanlage in einem Radarwirkungsbereich**
Method for operating a wind farm in a RADAR neighbourhood
Procédé de fonctionnement d'une éolienne dans un lieu d'effet du RADAR

(43) Veröffentlichungstag der Anmeldung: 01.08.2012
(73) Patentinhaber: Nordex Energy GmbH, 22419 Hamburg (DE)
(72) Erfinder: Steinmetz, Guillaume, 93210 La Plaine Saint-Denis (FR); Harms, Ulrich, 22399 Hamburg (DE); Arlt, Volker, 27299 Langwedel (DE); Hose, Gerd, 24211 Preetz (DE)
(74) Vertreter: Epping - Hermann - Fischer

(56) Entgegenhaltungen:
- WO-A1-2009/144435
- WO-A1-2010/098814
- WO-A1-2010/099773
- DE-B1- 2 737 767
- GB-A- 2 002 459
- US-A- 2 484 291
- US-A- 4 449 889
- US-A1- 2009 202 347
- US-B1- 7 302 903
- CIVIL AVIATION AUTHORITY: "CAA Policy and Guidelines on Wind Turbines", INTERNET CITATION, 1. Juli 2006 (2006-07-01), Seiten 1-66, XP007918986, ISBN: 978-0-11-792406-2 Gefunden im Internet: URL:http://www.caa.co.uk/docs/33/Cap764.pd f [gefunden am 2011-07-04]
- DEPARTMENT OF TRADE AND INDUSTRY: "FEASIBILITY OF MITIGATING THE EFFECTS OF WINDFARMS ON PRIMARY RADAR", INTERNET CITATION, 1. Januar 2003 (2003-01-01), Seiten 1-71, XP007918988, Gefunden im Internet: URL:http://www.bwea.com/aviation/ams_repor t.html [gefunden am 2011-07-04]

## Beschreibung

### Gebiet der Erfindung

Die Erfindung betrifft ein Verfahren zum Betreiben einer Windenergieanlage sowie eine Anordnung mit einer solchen Windenergieanlage, die eingerichtet ist das Verfahren auszuführen. Die Erfindung betrifft weiterhin ein System mit einer solchen Anordnung und einem Radarsystem, insbesondere einem Wetterradarsystem oder einem Flugsicherungsradarsystem.

### Hintergrund der Erfindung

Wetterradarsysteme werden verwendet, um Niederschlag, Intensität und die Bewegung von Niederschlagssystemen zu detektieren, die Art des Niederschlags zu bestimmen (beispielsweise Regen, Schnee, Hagel), sowie Vorhersagen über die zeitliche und räumliche Entwicklung von Niederschlagssystemen zu treffen. Flugsicherungsradarsysteme werden zur Überwachung des Flugverkehrs eingesetzt.

Radarsysteme emittieren gerichtete Primärsignale gepulster elektromagnetischer Strahlung im S-Band bzw. L-Band des Mikrowellenbereiches. Die Primärsignale werden mittels eines Impuls-Magnetrons oder einer Klystron-Röhre erzeugt, die über einen Wellenleiter mit einer Parabolantenne verbunden ist, die sowohl als Sende- als auch als Empfangsvorrichtung vorgesehen ist. Die elektromagnetischen Pulse breiten sich gerichtet von der Radarstation radial in einem Raumwinkel θ aus und werden an sich in diesem Raumwinkel befindenden Objekten wie Niederschlagssystemen, Geländeerhebungen, Flugzeugen, oder anderen anthropogenen Objekten reflektiert. Zwischen den einzelnen Pulsen dient die Radarstation als Empfänger für reflektierte Sekundärsignale. Der horizontale Abstand eines reflektierenden Objekts kann aus der Laufzeit der reflektierten, sich mit Lichtgeschwindigkeit im Pulsvolumen ausbreitenden elektromagnetischen Welle bestimmt werden. Aus der Phasenverschiebung der zurück gestreuten Sekundärsignale
aufeinander folgender Pulse kann zudem die Geschwindigkeit von reflektierenden Objekten abgeleitet werden ((Puls)-Doppler-Radar). Die radiale Doppler-Geschwindigkeit des Streuers ergibt sich dabei aus der Korrelation der Intensitäten aufeinander folgend detektierter Sekundärpulse. Die Tangentialgeschwindigkeit des Streuers bezüglich der Radarstation lässt sich aus der radialen Projektion der Tangentialgeschwindigkeit aus in benachbarten Winkelbereichen erfassten Streusignalen ableiten.

Windenergieanlagen können sich nachteilig auf die Auswertegenauigkeit von Radarsystemen auswirken. Durch die Rotationsbewegung der Rotorblätter und das sich windabhängig ändernde Profil erzeugen Windenergieanlagen Streusignale, die von Radarsystemen fehlinterpretiert werden können. Werden Windenergieanlagen gemäß einer Windrichtung ausgerichtet, welche um ungefähr 90° bezüglich der Einfallsrichtung eines Radar-Pulses gedreht liegt, können durch die Streuung an den sich bewegenden Rotorblättern Dubletten von
Geschwindigkeitssignaturen entstehen, die natürlichen Wettergegebenheiten ähneln und in kritischen
Wettersituationen zu Fehlinterpretationen und ungenauen kurzfristigen Wettervorhersagen führen können. Ebenso wirken sich derartige Störsignale nachteilig auf die Erkennung von Flugzeugen und die Bestimmung ihrer Flugbahnen aus. Ferner werden bezüglich der Einfallsrichtung leewärts befindliche Wettersysteme durch Windenergieanlagen verdeckt, was zu einer Abschwächung der Intensität der Sekundärsignale solcher Wettersysteme führt und diese bezüglich ihrer Niederschlagsintensität schlechter bewertbar macht.

Die WO 2010/122350 A1 und WO 2010/109174 A1 beschreiben die Verwendung eines Rotorblattes bzw. ein Verfahren zur Herstellung eines Rotorblattes für eine Windenergieanlage unter Verwendung eines elektromagnetisch absorbierenden Gewebes mit dem Ziel, die Radarsignatur von Windenergieanlagen zu reduzieren. Dabei bedingt die Fertigung zusätzliche Verarbeitungsschritte und Materialen, die zu einer Erhöhung der Fertigungskosten beim Rotorblattbau führen.

Die WO 2010/099773 A1 beschreibt ein Verfahren zur Detektion von Windenergieanlagen unter Verwendung eines Radarsystems. Dabei werden lediglich Windenergieanlagen als Störquelle identifiziert und lokalisiert.

Die US 2009/202347 A1 zeigt ein Steuersystem für ein Radarsystem und eine Windenergieanlage. Die Windenergieanlage wird in Abhängigkeit eines Betriebszustands des Radarsystems so angesteuert, dass die Auswirkungen der Windenergieanlage auf das Radarsystem minimiert werden können.

Die US 7 302 903 B1 beschreibt ein System zur Gewinnung von Kohlenwasserstoffen, das eine Windenergieanlage umfasst und eine möglichst gute Erkennbarkeit durch ein Radarsystem aufweisen soll. Dazu weist das System unter Anderem einen Radartransponder auf.

Die WO 2009/144435 A1 betrifft ein Radarsystem, das für einen Betrieb in Regionen mit Windenergieanlagen ausgebildet ist. Das Radarsystem ist dazu eingerichtet, von den Windenergieanlagen verursachte Störsignale in den empfangenen Antwortsignalen zu erkennen und zu filtern.

Es ist wünschenswert, ein Verfahren zum Betreiben einer Windenergieanlage anzugeben, mit dem die Windenergieanlage effektiv betreibbar ist und gleichzeitig das Radarsystem wenig beeinflusst.

In einer Ausführungsform der Erfindung umfasst ein Verfahren zum Betreiben einer Windenergieanlage ein Bereitstellen einer Windenergieanlage. Die Windenergieanlage weist eine länglich ausgedehnte Standvorrichtung, insbesondere einen Turm, beispielsweise ausgeführt als Stahlrohr-, Spannbeton-, Fachwerk- oder Sandwichturm, sowie einen über eine Azimutdrehverbindung drehbar auf der Standvorrichtung gelagerten Generator auf. Der Generator ist über eine Rotornabe mit einem Rotor und einer Rotornabe gekoppelt. Der Rotor weist wenigstens ein länglich ausgedehntes Rotorblatt auf. Eine Rotationsachse des Rotors in Richtung des Generators ist in ihrer horizontalen Ausrichtung einer Windrichtung nachführbar. Eine Position eines Radarsystems in Bezug auf die Windenergieanlage wird ermittelt. Ein Azimutwinkelbereich für die Rotationsachse des Rotors wird in Abhängigkeit von der ermittelten Position ermittelt, der bei einer Ausrichtung der Rotorwelle um die Längsachse der Standvorrichtung nicht dauerhaft eingenommen werden soll. Die Windrichtung von an der Windenergieanlage vorbeiströmendem Wind wird ermittelt. Ein Wert für die Ausrichtung der Rotationsachse des Rotors in Abhängigkeit von der ermittelten Windrichtung wird ermittelt. Die Rotationsachse des Rotors wird an einen Rand des Azimutwinkelbereich ausgerichtet, der bei einer Ausrichtung der Rotationsachse des Rotors um die Längsache der Standvorrichtung nicht dauerhaft eingenommen werden soll, wenn der ermittelte Wert in dem Azimutwinkelbereich liegt, der bei einer Ausrichtung der Rotationsachse des Rotors um die Längsache der Standvorrichtung nicht dauerhaft eingenommen werden soll.

Der Azimutwinkelbereich kann im Folgenden auch abgekürzt als "Bereich" bezeichnet werden. Wird eine Windrichtung ermittelt, bei der eine optimale Ausrichtung in dem zu vermeidenden Bereich liegt, wird die Rotationsachse des Rotors an den Rand des zu vermeidenden Bereiches ausgerichtet. Herkömmlich soll ein Betrieb bei Schräganströmung, bei dem die Rotorwelle nicht möglichst optimal in Windrichtung ausgerichtet wird, weitestgehend vermieden werden, da während eines solchen Betriebs bei Schräganströmung die mechanische Belastung auf die Windenergieanlage, insbesondere auf Lager und Getriebe, höher ist als bei einer möglichst optimalen Ausrichtung in Windrichtung.

Wenn die Rotationsachse des Rotors um die Längsachse der Standvorrichtung gedreht wird, insbesondere um den Rotor in Abhängigkeit von einer gemessenen Windrichtung möglichst optimal auszurichten, wird der Bereich vermieden, in dem die Bewegung des Rotors das Radarsystem stark beeinflusst. Wenn die Rotationsachse des Rotors um die Längsachse der Standvorrichtung gedreht wird, insbesondere um den Rotor in Abhängigkeit von einer gemessenen Windrichtung möglichst optimal auszurichten, soll der Bereich nicht dauerhaft eingenommen werden, in dem die Bewegung des Rotors das Radarsystem stark beeinflusst. Der Bereich, der vermieden wird, entspricht dem Bereich, der nicht dauerhaft eingenommen werden soll. Der Bereich, der nicht dauerhaft eingenommen werden soll, darf bei einer Ausrichtung der Rotationsachse des Rotors in Abhängigkeit von einer Windrichtung durchfahren werden. Ein Zeitraum ist vorgegeben, für den die Rotationsachse des Rotors in dem Bereich ausgerichtet sein darf. Eine Position innerhalb des Bereiches länger als der vorgegebene Zeitraum wird nicht eingenommen. Der Zeitraum ist beispielsweise in Abhängigkeit von einer Geschwindigkeit vorgegeben, mit der die Rotationsachse des Rotors ausrichtbar ist. Die Rotationsachse des Rotors entspricht insbesondere der Längsachse einer Rotorwelle.

Das Radarsystem ist insbesondere ein Wetterradarsystem zur Detektion von Wettersystemen oder ein Radarsystem zur Flugsicherung. Insbesondere werden mindestens zwei Bereiche vermieden, in denen die Bewegung des Rotors bei dem Radarsystem Wahrnehmungen, die Wetterphänomenen ähnlich sind, auslöst. Dadurch ist die Windenergieanlage im Wirkbereich von einem oder mehreren Radarsystemen bei gleichzeitigem zuverlässigem Betrieb des Radarsystems betreibbar.

In Ausführungsformen wird der Bereich, der bei der Ausrichtung der Rotationsachse des Rotors nicht dauerhaft eingenommen werden soll, in Abhängigkeit von einer Geraden ermittelt, auf der das Radarsystem und die Rotornabe liegen. Die Gerade ist eine gedachte direkte Verbindungslinie zwischen dem Radarsystem und der Rotornabe. Der Wirkbereich des Radarsystems ist insbesondere ein Bereich um diese Gerade.

In Ausführungsformen wird eine absolute geografische Koordinate vorgegeben, beispielsweise die Nordrichtung am Standort der Windenergieanlage. In Abhängigkeit von der absoluten geografischen Koordinate wird der Bereich ermittelt, der bei der Ausrichtung nicht dauerhaft eingenommen werden soll.

Wird in Ausführungsformen die Rotationsachse des Rotors an den Rand des zu vermeidenden Bereiches ausgerichtet, wird die Windenergieanlage bei Schräganströmung betrieben. Um die Windenergieanlage möglichst effektiv zu betreiben, wird die Rotationsachse des Rotors an den Rand des Bereiches ausgerichtet, an dem die Schräganströmung minimal ist, insbesondere im Vergleich zu dem anderen Rand des Bereiches. So ist ein möglichst effektiver Betrieb der Windenergieanlage bei gleichzeitig geringer Beeinflussung des Radarsystems möglich. Insbesondere ist ein Durchfahren der zu vermeidenden Bereiche während der Ausrichtung möglich, ein länger andauernder Betrieb innerhalb der zu vermeidenden Bereiche wird jedoch vermieden.

In Ausführungsformen wird ein Wert für eine tatsächliche Drehzahl des Rotors ermittelt, insbesondere unmittelbar bevor der zu vermeidende Bereich durchfahren wird. Ein zweiter Wert für die Drehzahl des Rotors wird vorgegeben. Der zweite Wert für die Drehzahl ist insbesondere abhängig von dem Radarsystem und ist so gewählt, dass die Drehung des Rotors bei einer Drehzahl von kleiner oder gleich dem zweiten Wert das Radarsystem nicht oder nur unwesentlich beeinträchtigt. Insbesondere entspricht der zweite Wert einem Leerlaufbetrieb der Windenergieanlage, so dass sich der Rotor beim Durchfahren des Bereiches, der nicht dauerhaft eingenommen werden soll, nur mit einer geringen Drehzahl dreht. Die Drehzahl des Rotors wird auf den vorgegebenen zweiten Wert, beispielsweise unter Verwendung eines Rotorblattverstellsystems eingeregelt. Anschließend wird der zu vermeidende Bereich durchfahren. Hat die Längsachse der Rotorwelle den zu vermeidende Bereich durchfahren, kann die Drehzahl des Rotors entsprechend der Windgeschwindigkeit eingeregelt und die Drehzahl erhöht werden. Eine Beeinflussung des Radarsystems durch das Durchfahren eines zu vermeidenden Bereiches wird somit zusätzlich vermieden.

Insbesondere wird der Bereich vermieden, in dem die Längsachse des Rotorblatts in Richtung der Verbindungslinie zwischen dem Radarsystem und der Rotornabe ist, also die Rotorwelle quer, insbesondere rechtwinklig, zu der Verbindungslinie ausgerichtet ist.

In weiteren Ausführungsformen werden die Bereiche vermieden, in denen die Längsrichtung des Rotorblattes quer zu der Verbindungslinie ausgerichtet ist, also die Rotorwelle in Richtung der Verbindungslinie ausgerichtet ist. Insbesondere werden die Bereiche vermieden, in denen die Längsrichtung des Rotorblattes rechtwinklig zu der Verbindungslinie ausgerichtet ist.So werden die Bereiche vermieden, in denen die Bewegung des Rotors das Radarsystem stark beeinflusst.

In weiteren Ausführungsformen wird eine Information für das Radarsystem bereitgestellt, wenn die Rotationsachse des Rotors in dem Bereich ist, der bei der Ausrichtung der Rotorwelle um die Längsachse der Standvorrichtung nicht dauerhaft eingenommen werden soll. Die Information wird in Ausführungsformen durch eine Steuervorrichtung der Windenergieanlage bereitgestellt. In weiteren Ausführungsformen wird die Information durch ein zentrales System bereitgestellt. Das zentrale System ist beispielsweise ein Steuersystem eines Windenergieanlagenparks, das die Informationen der jeweiligen Windenergieanlagen des Parks sammelt und bereitstellt.

In weiteren Ausführungsformen ist die Windenergieanlage eingerichtet, festzustellen, ob das Radarsystem aktiv ist. Lediglich dann, wenn das Radarsystem aktiv ist, werden die Bereiche, die nicht eingenommen werden sollen, auch tatsächlich nicht dauerhaft eingenommen. Die Information des Radarsystems wird in Ausführungsformen durch das Radarsystem einer Steuervorrichtung der Windenergieanlage bereitgestellt. In weiteren Ausführungsformen wird die Information durch das Radarsystem einem zentralen System bereitgestellt. Das zentrale System ist beispielsweise ein Steuersystem eines Windenergieanlagenparks, das die Information einer Vielzahl von Windenergieanlagen eines Windenergieanlagenparks bereitstellt.

Beispielsweise umfasst eine Anordnung eine Windenergieanlage. Weiterhin umfasst die Anordnung die Steuervorrichtung, die eingerichtet ist, Verfahrensschritte zum Betreiben der Windenergieanlage gemäß den Ausführungsformen auszuführen.

Beispielsweise umfasst ein System eine solche Anordnung. Weiterhin umfasst das System ein Radarsystem, wobei die Windenergieanlage in einem Wirkbereich des Radarsystems angeordnet ist. Das Radarsystem ist insbesondere ein Wetterradarsystem oder ein Radarsystem zur Flugsicherung.

### Kurze Beschreibung der Zeichnungen

Weitere Vorteile, Merkmale und Weiterbildungen ergeben sich aus den nachfolgenden in Verbindung mit den Figuren erläuterten Beispielen. Gleiche, gleichartige und gleichwirkende Elemente können in den Figuren mit den gleichen Bezugszeichen versehen sein. Die dargestellten Elemente und deren Größenverhältnisse zueinander sind grundsätzlich nicht als maßstabsgerecht anzusehen, vielmehr können einzelne Elemente, wie beispielsweise Bereiche, zum besseren Verständnis übertrieben dick oder groß dimensioniert dargestellt sein.

Es zeigen:
Figur 1 eine schematische Darstellung einer Windenergieanlage gemäß einer Ausführungsform, und
Figur 2 eine schematische Darstellung einer Aufsicht auf die Windenergieanlage der Figur 1 und ein Radarsystem gemäß einer Ausführungsform,
Figur 3 eine schematische Darstellung einer Aufsicht auf die Windenergieanlage der Figur 1 und ein Radarsystem gemäß einer weiteren Ausführungsform.

### Detaillierte Beschreibung von Ausführungsformen

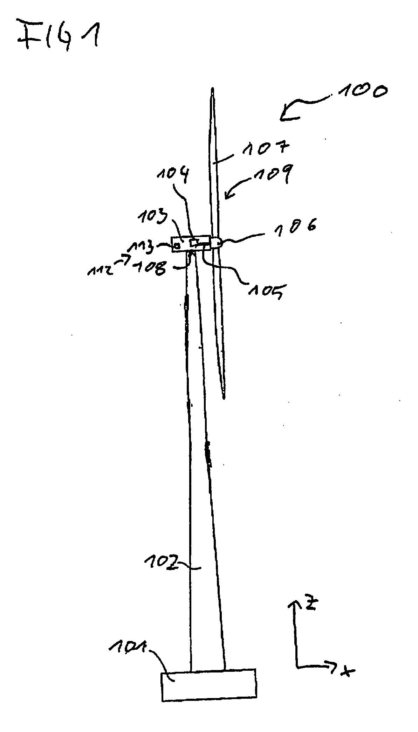

Figur 1 zeigt eine Windenergieanlage 100. Die Windenergieanlage weist ein Fundament 101 auf, mittels dem die Windenergieanlage auf einem Untergrund befestigt ist. Mit dem Fundament ist eine Standvorrichtung 102 gekoppelt. Die Standvorrichtung 102 ist in Z-Richtung der Figur 1 länglich ausgedehnt. Die Standvorrichtung 102 ist insbesondere ein Turm, beispielsweise ausgeführt als Stahlrohr-, Spannbeton-, Fachwerk- oder Sandwichturm.

An einem dem Fundament 101 gegenüberliegenden Ende 108 der Standvorrichtung 102 ist ein Maschinenhaus 103 angeordnet. Das Maschinenhaus umfasst einen Generator 104, der über eine Rotorwelle 105 mit einem Rotor 109 gekoppelt ist. Insbesondere ist die Rotorwelle 105 mit einer Rotornabe 106 des Rotors 109 gekoppelt. Der Rotor 109 weist weiterhin ein Rotorblatt 107 beziehungsweise eine Mehrzahl von Rotorblättern 107 auf, die mit der Rotornabe 106 gekoppelt sind. Der Rotor 109 wird in Betrieb durch Wind in Rotation versetzt und diese Rotation über die Rotorwelle 105 zu dem Generator 104 übertragen, der die kinetische Energie des Rotors 109 in elektrische Energie umwandelt.

Das Maschinenhaus 103 ist mit der Standvorrichtung 102 so gekoppelt, dass das Maschinenhaus mit dem Rotor um die Längsachse der Standvorrichtung 102 drehbar ist. Das Maschinenhaus 103 ist über eine Azimutdrehverbindung derart drehbar auf der Standvorrichtung 102 gelagert, dass das Maschinenhaus 103 und damit auch die Rotorwelle 105 und insbesondere die Längsachse der Rotorwelle 105 in ihrer horizontalen Ausrichtung der Windrichtung nachgeführt werden kann. Dadurch ist es möglich, das Maschinenhaus 103 und insbesondere den Rotor 109 in Abhängigkeit von einer gemessenen Windrichtung 127 so ausrichten, dass eine hohe Effizienz bei der Umwandlung der kinetischen Energie des Windes in elektrische Energie mittels des Generators 104 erreicht wird. Insbesondere wird das Maschinenhaus 103 so ausgerichtet, dass die Rotorwelle 105 in Richtung der gemessenen Windrichtung ausgerichtet ist.

Zur Ausrichtung des Rotors ist eine Steuervorrichtung 113 angeordnet, die eingerichtet ist, in Abhängigkeit von der gemessenen Windrichtung 127 eine Ausrichtung des Rotors zu erwirken. Die Steuervorrichtung 113 ist in Ausführungsformen Teil einer Anordnung 112, die die Steuervorrichtung 113 und die Windenergieanlage 100 aufweist.

Im Normalbetrieb der Windenergieanlage wird beispielsweise über ein Zeitintervall von 10 Minuten die Windrichtung 127 gemessen, gemittelt und bestimmt, wie die Rotornabe 106 der Windrichtung nachzuführen ist. Das Zeitintervall ist in weiteren Ausführungsformen länger als 10 Minuten, in wiederum weiteren Ausführungsformen kürzer als 10 Minuten. Im Normalbetrieb wird die Windenergieanlage so ausgerichtet, dass eine Schräganströmung vermieden oder möglichst minimal wird.

Die Windenergieanlage weist dazu eine Vorrichtung zur Bestimmung der Windrichtung, z.B. einen Messwertgeber zur Windrichtungsbestimmung mittels einer Windfahne oder einem 2D-Ultraschallanemometer zur Bestimmung der horizontalen Komponenten der Windgeschwindigkeit und der Windrichtung auf. Die Vorrichtung zur Bestimmung der Windrichtung erfasst wenigstens Messwerte der Windrichtung 127 und überträgt diese an die Steuervorrichtung 113.

Für die Nachführung gibt die Steuervorrichtung 113 ein Steuerungssignal an die Azimutantriebsvorrichtung (nicht gezeigt) weiter. Dabei kann das Signal beispielsweise direkt an einen Frequenzumrichter weitergegeben werden, über den ein Azimutantrieb gespeist wird.

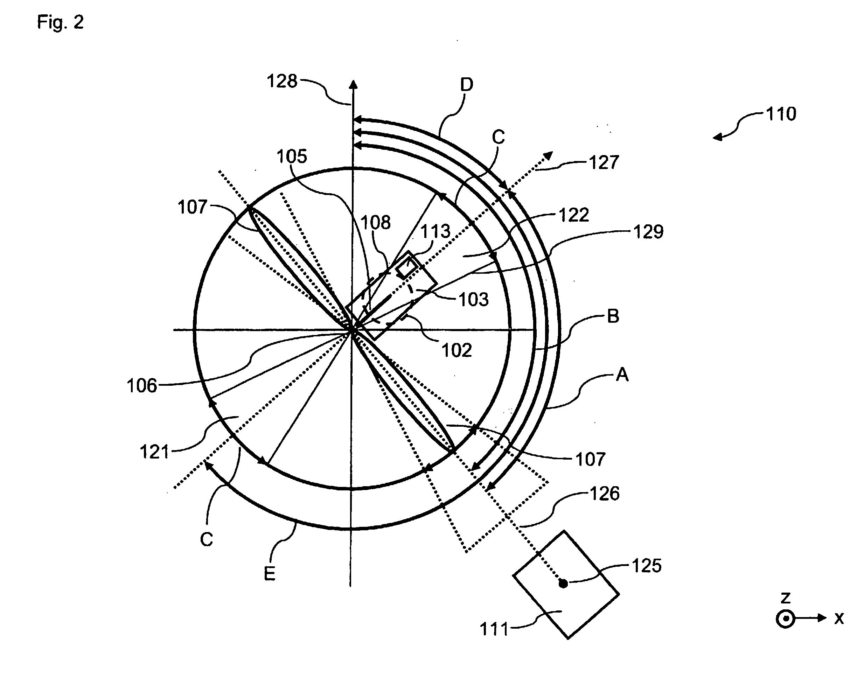

Figur 2 zeigt ein System 110 aus einer Windenergieanlage 100 und einem Radarsystem 111 gemäß einer Ausführungsform. Die Windenergieanlage 100 ist in Draufsicht dargestellt.

Das Radarsystem 111 ist insbesondere ein Wetterradarsystem, das eingerichtet ist, Niederschlag, die Intensität und die Bewegung von Wettersystemen zu detektieren oder ein Flugsicherungsradarsysteme zur Überwachung des Flugverkehrs.

Die Windenergieanlage 100 ist in dem System 110 in einem Wirkbereich des Radarsystems 111 angeordnet. Die elektromagnetischen Wellen, die von einer Sende- und Empfangsantenne des Radarsystems ausgesendet werden, erreichen die Windenergieanlage 100. Die Bewegung des Rotors 109 und insbesondere der Rotorblätter 107 wird von dem Radarsystem 111 detektiert. Die Rotationsbewegung der Rotorblätter weist beispielsweise ein Muster auf, das von dem Radarsystem als ein Wetterphänomen, beispielsweise Niederschlag, erkannt wird.

Zum Betreiben der Windenergieanlage 100 wird eine Position 125 des Radarsystems in Bezug auf die Windenergieanlage 110 ermittelt. Insbesondere wird dabei eine Gerade 126 ermittelt, auf der das Radarsystem 111 und die Rotornabe 106 liegen. Der Wirkbereich des Radarsystems 111 ist im Bereich der Geraden 126. Insbesondere umgibt der Wirkbereich des Radarsystems die Gerade 126.

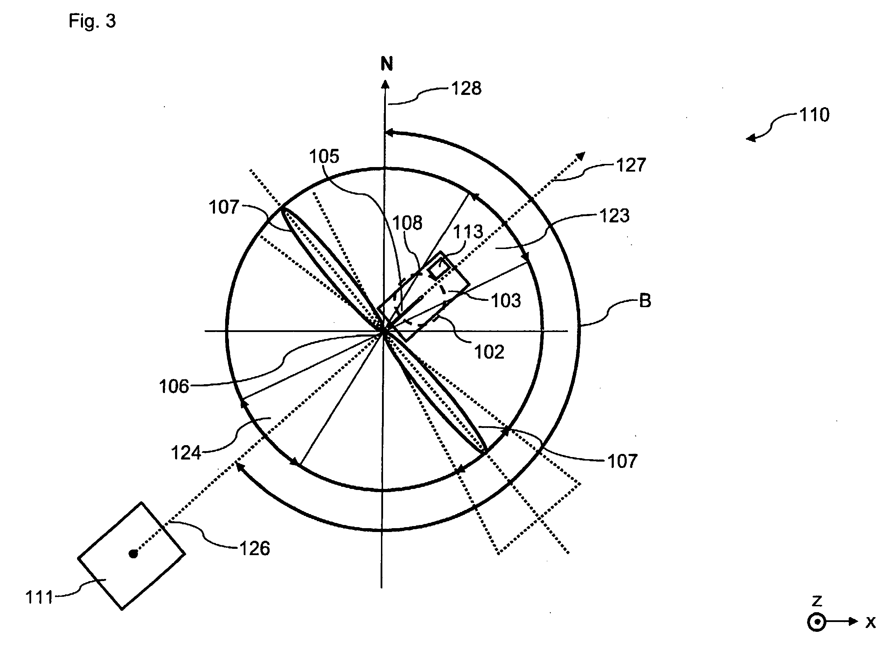

Um die Windenergieanlage 100 so zu betreiben, dass das Radarsystem 111 möglichst wenig in seinem Betrieb beeinflusst wird, also die Bewegung des Rotors 109 möglichst wenig Störsignale bei dem Radarsystem 111 verursacht, werden in Abhängigkeit von der Position der Windenergieanlage 100 und des Radarsystems 111 relativ zueinander Bereiche 121, 122 und 123, 124 (Figur 3) ermittelt, in denen bei einer Ausrichtung des Rotors in Abhängigkeit von der ermittelten Windrichtung 127 eine Ausrichtung der Rotationsachse des Rotors, insbesondere eine Ausrichtung der Rotorwelle 105, nicht dauerhaft eingenommen werden soll. Die Bereiche 121, 122 und 123, 124 werden insbesondere abhängig von der Geraden 126 ermittelt.

In weiteren Ausführungsformen werden weniger als 4 Bereiche ermittelt, die bei der Ausrichtung der Rotorwelle 105 in Abhängigkeit von der ermittelten Windrichtung 127 vermieden werden, beispielsweise 2 Bereiche. In weiteren Ausführungsformen werden mehr als 4 Bereiche ermittelt, die bei der Ausrichtung der Rotorwelle 105 in Abhängigkeit von der ermittelten Windrichtung 127 vermieden werden, beispielsweise 6 Bereiche. Dies ist insbesondere der Fall, wenn die Windenergieanlage im Wirkbereich von zwei oder mehr Radarsystemen angeordnet ist. Zudem werden in Ausführungsformen durch Messung weitere Bereiche ermittelt, innerhalb derer ein Betrieb der Windenergieanlage sich als störend auf das Radarsystem erweis.

Beispielsweise wird der Bereich 122 in Abhängigkeit von einem Winkel A zwischen der Rotorwelle und der Geraden 126 ermittelt. Der Winkel A ist für den Bereich 122 90°. Die Größe des Bereiches um die Längsrichtung der Rotorwelle wird von einem weiteren Winkel C vorgegeben. Der Winkel C ist der Öffnungswinkel der Bereiche, die bei einer Ausrichtung der Rotorwelle 105 um die Längsache der Standvorrichtung 102 nicht dauerhaft eingenommen werden sollen. Der Öffnungswinkel der Bereiche ist in Ausführungsformen jeweils gleich groß. In weiteren Ausführungsformen ist der Öffnungswinkel der Bereiche jeweils verschieden. Der Winkel C gibt die Breite des Bereiches 122 vor. Insbesondere ist der Winkel C abhängig von dem Radarsystem 111 sowie von der konstruktiven Ausformung der Windenergieanlage 100, insbesondere von der konstruktiven Ausformung der Rotorblätter 107. Der Winkel C wird so vorgegeben, dass der Bereich 122 so groß ist, dass eine wesentliche Störung des Radarsystems über einen längeren Zeitraum vermieden wird. Vergleichbar dazu werden die Bereiche 121 und 123 sowie 124 ermittelt, der Winkel A hat hierfür einen Wert von 180° (Bereich 121), 270° (Bereich 123) beziehungsweise 0° (Bereich 124).

In weiteren Ausführungsformen ist eine absolute geografische Koordinate 128 vorgegeben, beispielsweise die Nordrichtung. Die absolute geografische Koordinate 128 wird beispielsweise beim Aufstellen der Windenergieanlage ermittelt und in der Steuervorrichtung 113 gespeichert.

Die Bereiche 121, 122, 123 und 124 werden in den Ausführungsformen in Abhängigkeit von der absoluten geografischen Koordinate 128 ermittelt. Dabei wird ein Winkel B zwischen der absoluten geografischen Koordinate 128 und der Geraden 126 ermittelt. Der Bereich 122 ergibt sich aus dem Winkel B - 90°, so dass zwischen der Längsrichtung der Welle 105 und der Richtung der absoluten geografischen Koordinate 128 ein Winkel D ausgebildet wird. Entsprechend ergibt sich der Bereich 121 aus dem Winkel B + 90°, so dass zwischen der absoluten geografischen Koordinate 128 und der Mitte des Bereiches 121 ein Winkel E ausgebildet wird. Die Mitte des Bereiches 124 schließt mit der absoluten geografischen Koordinate 128 den Winkel B ein. Die Mitte des Bereiches 123 ergibt sich aus dem Winkel B + 180°.

Die Bereiche 121 und 122 werden folglich so ermittelt, dass die Rotornabe 105 nicht über einen längeren Zeitraum so ausgerichtet wird, dass die Längsrichtung der Rotorblätter 107 in Richtung der Geraden 126 gerichtet ist. Die Bereiche werden so ermittelt, dass die Gerade 126 nicht über einen längeren Zeitraum in der Rotationsebene der Rotorblätter ausgerichtet ist. Die Bereiche 121 und 122 geben eine zu vermeidenden Ausrichtung für die Rotorwelle 105 vor, in der die Längsrichtung der Rotorblätter 107 in Richtung der Geraden 126 ist.

Figur 3 zeigt eine gedrehte Draufsicht auf das System 110 der Figur 2. Die Bereiche 123 und 124 geben jeweils einen Bereich für die Ausrichtung der Rotorwelle 105 vor, in denen die Längsrichtung der Rotorblätter 107 quer zu der Geraden 126 ist. Eine Ausrichtung der Rotorwelle 105 in den Bereichen 123 und 124 wird vermieden, so dass eine Ausrichtung des Rotors 109 vermieden wird, in der die Längsrichtung der Rotorblätter 107 quer zu der Geraden 126 ist. Dadurch wird eine dauerhafte Ausrichtung der Rotorwelle vermieden, bei der die Standvorrichtung 102 der Windenergieanlage periodisch durch die Bewegung der Rotorblätter 107 gegenüber auf die Windenergieanlage 100 treffenden Radarsignale des Radarsystems 111 abgeschattet wird und sich dadurch das gestreute Sekundärsignal zeitlich stark ändert, wodurch das Radarsystem 111 stark beeinflusst würde.

Wird eine optimale Ausrichtung der Windenergieanlage in Abhängigkeit von der Windrichtung 127 ermittelt, in der die Rotorwelle 105 in einem der Bereiche 121, 122, 123 oder 124 ausgerichtet ist, richtet die Steuervorrichtung 113 die Rotorwelle 105 an einen Rand des entsprechenden Bereiches, beispielsweise an einen Rand 129 des Bereiches 122 aus. So ist die Windenergieanlage möglichst nah an der optimalen Ausrichtung und daher noch effektiv betreibbar. Gleichzeitig wird das Radarsystem 111 durch die Windenergieanlage wenig beeinflusst.

In Ausführungsformen ist die Windenergieanlage, insbesondere die Steuervorrichtung 113, eingerichtet, eine Information für das Radarsystem 111 bereitzustellen, wenn beim Ausrichten der Rotorwelle 105 einer der zu vermeidenden Bereiche 121, 122, 123 oder 124 durchlaufen wird. Beim Ausrichten der Rotationsebene des Rotors 107 quer zu der Windrichtung 127 ist es möglich, dass sich die Rotorwelle 105 vorübergehend in einem der zu vermeidenden Bereiche 121, 122, 123 oder 124 befindet. In Abhängigkeit von der zur Verfügung gestellten Information kann dann das Radarsystem während dieser Zeit die Störung durch die Windenergieanlage berücksichtigen. Beispielsweise wertet das Radarsystem 111 in der Zeit, in der sich die Rotornabe 105 in einem der zu vermeidenden Bereiche befindet, die Radarsignale nicht aus.

Ist beispielsweise der Öffnungswinkel C des Bereiches 122 16°, also von -8 bis +8°, und wird die Windenergieanlage so betrieben, dass sie in Richtung +9° in Bezug auf die Mitte des Bereiches 122 ausgerichtet ist und wird über ein Zeitintervall von 10 Minuten ermittelt, dass die Windrichtung sich im Mittel auf -9° in Bezug auf die Mitte des Bereiches 122 eingestellt hat, so ist es zulässig die Rotornabe 105 durch den zu vermeidenden Bereich 122 nachzuführen. Wird beispielsweise festgestellt, dass die Windrichtung sich im Mittel auf -2° in Bezug auf die Mitte des Bereiches 122 eingestellt hat, wird die Anlage in ihrer Ausrichtung auf - 8°, also dem nächstliegenden Rand 129 des Bereiches 122, nachgeführt werden. Auf diese Weise wird eine Schräganströmung unter Berücksichtigung eines zu vermeidenden Bereiches minimiert.

Durch die Vermeidung der Ausrichtung der Rotorwelle 105 zumindest in den Bereichen 121, 122, 123 und 124 wird ein Betrieb der Windenergieanlage 100 ermöglicht, der das Radarsystem 111 möglichst wenig beeinflusst. Dadurch, dass die Ausrichtungen des Rotors vermieden werden, in denen die Bewegung der Rotorblätter den Betrieb des Radarsystems 111 stark stört, ist ein zuverlässiger Betrieb des Radarsystems 111 und ein gleichzeitiger effektiver Betrieb der Windenergieanlage 100 möglich.

## Patentansprüche

1. Verfahren zum Betreiben einer Windenergieanlage (100), umfassend:
- Bereitstellen der Windenergieanlage (100) mit einer länglich ausgedehnten Standvorrichtung (102), einem über eine Azimutdrehverbindung drehbar auf der Standvorrichtung (102) gelagerten Generator (104) und einem über eine Rotornabe (106) mit dem Generator (104) gekoppelten Rotor (109) mit einem länglich ausgedehnten Rotorblatt (107), wobei eine Rotationsachse des Rotors (109) in Richtung des Generators (104) in ihrer horizontalen Ausrichtung einer Windrichtung (127) nachführbar ist;
- Ermitteln einer Position (125) eines Radarsystems (111) in Bezug auf die Windenergieanlage (100);
- Ermitteln mindestens eines Azimutwinkelbereiches (121, 122, 123, 124) für die Ausrichtung der Rotationsachse des Rotors (109) in Abhängigkeit von der ermittelten Position (125), der bei einer Ausrichtung der Rotationsachse um die Längsache der Standvorrichtung (102) nicht dauerhaft eingenommen werden soll;
- Betreiben der Windenergieanlage (100), wobei der mindestens eine ermittelte Azimutwinkelbereich (121, 122, 123, 124) bei der Ausrichtung der Rotationsachse des Rotors (109) um die Längsache der Standvorrichtung (102) nicht dauerhaft eingenommen wird, **gekennzeichnet durch** die Schritte:
- Ermitteln der Windrichtung (127);
- Ermitteln eines Werts für die Ausrichtung der Rotationsachse des Rotors (109) in Abhängigkeit von der ermittelten Windrichtung (127);
- Ausrichten der Rotationsachse des Rotors (109) an einen Rand (129) des Azimutwinkelbereiches (121, 122, 123, 124), der bei einer Ausrichtung der Rotationsachse des Rotors (109) um die Längsache der Standvorrichtung (102) nicht dauerhaft eingenommen werden soll, wenn der ermittelte Wert in dem Azimutwinkelbereich (121, 122, 123, 124) liegt, der bei einer Ausrichtung der Rotationsachse des Rotors (109) um die Längsache der Standvorrichtung (102) nicht dauerhaft eingenommen werden soll.

2. Verfahren nach Anspruch 1, umfassend:
- Ermitteln des Azimutwinkelbereiches (121, 122, 123, 124), der bei der Ausrichtung nicht dauerhaft eingenommen werden soll, in Abhängigkeit von einem Winkel (A) zwischen der Rotationsachse des Rotors (109) und einer Geraden (126), auf der das Radarsystem (111) und die Rotornabe (106) liegen.

3. Verfahren nach Anspruch 1, umfassend:
- Vorgeben einer absoluten geografische Koordinate (128) ;
- Ermitteln des Azimutwinkelbereiches (121, 122, 123, 124) der bei der Ausrichtung nicht dauerhaft eingenommen werden soll, in Abhängigkeit von einem Winkel (B) zwischen der absoluten geografischen Koordinate (128) und einer Geraden (126), auf der das Radarsystem (111) und die Rotornabe (106) liegen.

4. Verfahren nach Anspruch 3, umfassend:
- Ermitteln eines Winkels (F) zwischen der absoluten geografische Koordinate (128) und der Rotationsachse des Rotors (109) in Abhängigkeit von dem Winkel (B) zwischen der absoluten geografischen Koordinate (128) und der Geraden (126), auf der das Radarsystem und die Rotornabe (106) liegen,
- Ermitteln des Azimutwinkelbereiches (121, 122, 123, 124), der bei der Ausrichtung nicht dauerhaft eingenommen werden soll, in Abhängigkeit von dem Winkel (F) zwischen der absoluten geografische Koordinate (128) und der Rotationsachse des Rotors (109).

5. Verfahren nach einem der Ansprüche 2 bis 4, bei dem ein weiterer Azimutwinkelbereich (121) ermittelt wird, der bei der Ausrichtung der Rotationsachse des Rotors (109) um die Längsache der Standvorrichtung (102) nicht dauerhaft eingenommen werden soll, wobei der Azimutwinkelbereich (122) und der weitere Azimutwinkelbereich (121) jeweils so ermittelt werden, dass die Längsrichtung des Rotorblatts (107) in Richtung der Geraden (126) ausgerichtet ist, auf der das Radarsystem (111) und die Rotornabe (106) liegen.

6. Verfahren nach einem der Ansprüche 2 bis 5, bei dem zwei weitere Azimutwinkelbereiche (123, 124) ermittelt werden, die bei einer Ausrichtung der Rotationsachse des Rotors (109) um die Längsache der Standvorrichtung (102) vermieden werden, wobei die zwei Azimutwinkelbereiche (123, 124) so ermittelt werden, dass die Längsrichtung des Rotorblatts (107) quer zu der Geraden (126) ausgerichtet ist, auf der das Radarsystem (111) und die Rotornabe (106) liegen.

7. Verfahren nach einem der Ansprüche 1 bis 6, bei dem die Rotationsachse des Rotors (109) an den Rand (129) des Azimutwinkelbereiches (121, 122, 123, 124) ausgerichtet wird, an dem die Schräganströmung minimal ist.

8. Verfahren nach einem der Ansprüche 1 bis 7, umfassend:
- Bereitstellen einer Information für das Radarsystem (111), wenn die Rotationsachse des Rotors (109) in dem Azimutwinkelbereich (121, 122, 123, 124) ist, der bei der Ausrichtung der Rotationsachse des Rotors (109) um die Längsache der Standvorrichtung (102) nicht dauerhaft eingenommen werden soll.

9. Verfahren nach einem der Ansprüche 1 bis 8, umfassend:
- Ermitteln eines ersten Werts einer Drehzahl des Rotors (109) durch eine Steuervorrichtung (113),
- Vorgeben eines zweiten Werts für die Drehzahl des Rotors (109) durch die Steuervorrichtung (113),
- Vergleichen des ersten Werts der Drehzahl des Rotors (109) und des zweiten Werts für die Drehzahl des Rotors (109),
- Verändern der Drehzahl des Rotors (109), wenn der erste Wert der Drehzahl des Rotors (109) größer oder gleich dem zweiten Wert der Drehzahl des Rotors (109) ist.

10. Verfahren nach Anspruch 9, umfassend:
- Verändern der Drehzahl des Rotors (109) auf einen Wert kleiner oder gleich dem zweiten Wert der Drehzahl.

11. Verfahren nach Anspruch 10, umfassend:
- bei dem der zweite Wert der Drehzahl einer Drehzahl des Rotors (109) in einem Leerlaufbetrieb entspricht.

12. Verfahren nach einem der Ansprüche 9 bis 11, umfassend:
- Regeln der Drehzahl des Rotors (109) in Abhängigkeit von einer gemessenen Windgeschwindigkeit, wenn die Rotationsachse des Rotors (109) außerhalb des mindestens einen Azimutwinkelbereiches (121, 122, 123, 124) ausgerichtet ist, der bei einer Ausrichtung der Rotationsachse um die Längsache der Standvorrichtung (102) nicht dauerhaft eingenommen werden soll, nach dem Verändern der Drehzahl des Rotors (109).

## Claims

1. Method for operating a wind turbine (100), comprising:
- providing the wind turbine (100) including an elongated stand apparatus (102), a generator (104) rotatably mounted on the stand apparatus (102) via a yaw system, and a rotor (109) which is coupled to the generator (104) via a rotor hub (106) and has an elongated rotor blade (107), wherein a rotational axis of the rotor (109) in the direction of the generator (104) can be readjusted in its horizontal alignment with respect to a wind direction (127);
- determining a position (125) of a radar system (111) with respect to the wind turbine (100);
- determining at least one yaw angle sector (121, 122, 123, 124) for aligning the rotational axis of the rotor (109) as a function of the determined position (125), which is not intended to be permanently assumed for alignment of the rotational axis about the longitudinal axis of the stand apparatus (102);
- operating the wind turbine (100), wherein the at least one determined yaw angle sector (121, 122, 123, 124) is not permanently assumed when the rotational axis of the rotor (109) is aligned about the longitudinal axis of the stand apparatus (102), **characterized by** the steps of:
- determining the wind direction (127);
- determining a value for the alignment of the rotational axis of the rotor (109) as a function of the determined wind direction (127);
- aligning the rotational axis of the rotor (109) with an edge (129) of the yaw angle sector (121, 122, 123, 124) which is not intended to be permanently assumed for alignment of the rotational axis of the rotor (109) about the longitudinal axis of the stand apparatus (102), if the determined value is within the yaw angle sector (121, 122, 123, 124) not intended to be permanently assumed for an alignment of the rotational axis of the rotor (109) about the longitudinal axis of the stand apparatus (102).

2. Method according to Claim 1, comprising:
- determining the yaw angle sector (121, 122, 123, 124), which is not intended to be permanently assumed for the alignment, as a function of an angle (A) between the rotational axis of the rotor (109) and a straight line (126) on which the radar system (111) and the rotor hub (106) lie.

3. Method according to Claim 1, comprising:
- predetermining an absolute geographic coordinate (128);
- determining the yaw angle sector (121, 122, 123, 124), which is not intended to be permanently assumed for the alignment, as a function of an angle (B) between the absolute geographic coordinate (128) and a straight line (126) on which the radar system (111) and the rotor hub (106) lie.

4. Method according to Claim 3, comprising:
- determining an angle (F) between the absolute geographic coordinate (128) and the rotational axis of the rotor (109) as a function of the angle (B) between the absolute geographic coordinate (128) and the straight line (126) on which the radar system and the rotor hub (106) lie,
- determining the yaw angle sector (121, 122, 123, 124) which is not intended to be permanently assumed for the alignment as a function of the angle (F) between the absolute geographic coordinate (128) and the rotational axis of the rotor (109).

5. Method according to one of Claims 2 to 4, wherein a further yaw angle sector (121) is determined, which is not intended to be permanently assumed for the alignment of the rotational axis of the rotor (109) about the longitudinal axis of the stand apparatus (102), with the yaw angle sector (122) and the further yaw angle sector (121) each being determined such that the longitudinal direction of the rotor blade (107) is aligned in the direction of the straight line (126) on which the radar system (111) and the rotor hub (106) lie.

6. Method according to one of Claims 2 to 5, wherein two further yaw angle sectors (123, 124) are determined, which are avoided for alignment of the rotational axis of the rotor (109) about the longitudinal axis of the stand apparatus (102), with the two yaw angle sectors (123, 124) being determined such that the longitudinal direction of the rotor blade (107) is aligned transversely with respect to the straight line (126) on which the radar system (111) and the rotor hub (106) lie.

7. Method according to one Claims 1 to 6, wherein the rotational axis of the rotor (109) is aligned with the edge (129) of the yaw angle sector (121, 122, 123, 124) at which the oblique incident flow is minimal.

8. Method according to one Claims 1 to 7, comprising:
- providing information for the radar system (111) when the rotational axis of the rotor (109) is within the yaw angle sector (121, 122, 123, 124) which is not intended to be permanently assumed for the alignment of the rotational axis of the rotor (109) about the longitudinal axis of the stand apparatus (102).

9. Method according to one Claims 1 to 8, comprising:
- determining a first value of a rotational speed of the rotor (109) via a control apparatus (113);
- presetting a second value for the rotational speed of the rotor (109) via the control apparatus (113);
- comparing the first value of the rotational speed of the rotor (109) and the second value for the rotational speed of the rotor (109)
- changing the rotational speed of the rotor (109) if the first value of the rotational speed of the rotor (109) is greater than or equal to the second value of the rotational speed of the rotor (109).

10. Method according to Claim 9, comprising:
- changing of the rotational speed of the rotor (109) to a value which is less than or equal to the second value of the rotational speed.

11. Method according to Claim 10, comprising:
- wherein the second value of the rotational speed corresponds to a rotational speed of the rotor (109) during no-load operation.

12. Method according to one Claims 9 to 11, comprising:
- controlling the rotational speed of the rotor (109) in dependence of a measured wind speed, when the rotational axis of the rotor (109) is aligned outside the at least one yaw angle sector (121, 122, 123, 124) which is not intended to be permanently assumed for alignment of the rotational axis about the longitudinal axis of the stand apparatus (102), after the changing of the rotational speed of the rotor (109).

## Revendications

1. Procédé d'actionnement d'une éolienne (100), comprenant :
- la mise à disposition de l'éolienne (100) avec un dispositif de socle (102) allongé dans le plan oblong, un générateur (104) disposé de façon à pouvoir tourner sur le dispositif de socle (102) via une liaison de rotation azimutale et un rotor (109), avec une pale de rotor (107) allongée dans le plan oblong, couplé au générateur (104) via un moyeu de rotor (106), un axe de rotation du rotor (109) pouvant être asservi à une direction de vent (127) dans son orientation horizontale en direction du générateur (104) ;
- le calcul d'une position (125) d'un système de radar (111) par rapport à l'éolienne (100) ;
- le calcul d'au moins une plage angulaire azimutale (121, 122, 123, 124) pour l'orientation de l'axe de rotation du rotor (109) en fonction de la position (125) calculée ne devant pas être adoptée durablement en cas d'orientation de l'axe de rotation autour de l'axe longitudinal du dispositif de socle (102) ;
- l'actionnement de l'éolienne (100), l'au moins une plage angulaire azimutale (121, 122, 123, 124) calculée lors de l'orientation de l'axe de rotation du rotor (109) n'est pas adoptée durablement autour de l'essieu longitudinal du dispositif de socle (102) ;
**caractérisé par** les étapes suivantes :
- le calcul de la direction de vent (127) ;
- le calcul d'une valeur pour l'orientation de l'axe de rotation du rotor (109) en fonction de la direction de vent (127) calculée ;
- l'orientation de l'axe de rotation du rotor (109) au niveau d'un bord (129) de la plage angulaire azimutale (121, 122, 123, 124) ne devant pas être adoptée durablement lors d'une orientation de l'axe de rotation du rotor (109) autour de l'essieu longitudinal du dispositif de socle (102), lorsque la valeur calculée se situe dans la plage angulaire azimutale (121, 122, 123, 124) ne devant pas être adoptée durablement lors d'une orientation de l'axe de rotation du rotor (109) autour de l'essieu longitudinal du dispositif de socle (102).

2. Procédé selon la revendication 1, comprenant :
- le calcul de la plage angulaire azimutale (121, 122, 123, 124) ne devant pas être adoptée durablement lors de l'orientation, en fonction d'un angle (A) prévu entre l'axe de rotation du rotor (109) et une droite (126) et sur lequel le système de radar (111) et le moyeu de rotor (106) reposent.

3. Procédé selon la revendication 1, comprenant :
- la fixation au préalable d'une coordonnée géographique (128) absolue ;
- le calcul de la plage angulaire azimutale (121, 122, 123, 124) ne devant pas être adoptée durablement lors de l'orientation, en fonction d'un angle (B) prévu entre la coordonnée géographique (128) absolue et une droite (126) et sur lequel le système de radar (111) et le moyeu de rotor (106) reposent.

4. Procédé selon la revendication 3, comprenant :
- le calcul d'un angle (F) entre la coordonnée géographique (128) absolue et l'axe de rotation du rotor (109) en fonction de l'angle (B) prévu entre la coordonnée géographique (128) absolue et la droite (126) et sur lequel le système de radar et le moyeu de rotor (106) reposent ;
- le calcul de la plage angulaire azimutale (121, 122, 123, 124) ne devant pas être adoptée durablement lors de l'orientation, en fonction de l'angle (F) prévu entre la coordonnée géographique absolue (128) et l'axe de rotation du rotor (109).

5. Procédé selon l'une quelconque des revendications 2 à 4, dans lequel une plage angulaire azimutale (121) supplémentaire est calculée, ladite plage ne devant pas être adoptée durablement lors de l'orientation de l'axe de rotation du rotor (109) autour de l'essieu longitudinal du dispositif de socle (102), la plage angulaire azimutale (122) et la plage angulaire azimutale (121) supplémentaire étant respectivement calculées de telle sorte que la direction longitudinale de la pale de rotor (107) est orientée en direction de la droite (126) sur laquelle le système de radar (111) et le moyeu de rotor (106) reposent.

6. Procédé selon l'une quelconque des revendications 2 à 5, dans lequel deux plages angulaires azimutales (123, 124) supplémentaires sont calculées, lesdites plages étant évitées lors d'une orientation de l'axe de rotation du rotor (109) autour de l'essieu longitudinal du dispositif de socle (102), les deux plages angulaires azimutales (123, 124) étant calculées de telle sorte que la direction longitudinale de la pale de rotor (107) est orientée transversalement à la droite (126) sur laquelle le système de radar (111) et le moyeu de rotor (106) reposent.

7. Procédé selon l'une quelconque des revendications 1 à 6, dans lequel l'axe de rotation du rotor (109) est aligné au niveau du bord (129) de la plage angulaire azimutale (121, 122, 123, 124) au niveau duquel l'écoulement oblique est minimal.

8. Procédé selon l'une quelconque des revendications 1 à 7, comprenant :
- la mise à disposition d'une information pour le système de radar (111) lorsque l'axe de rotation du rotor (109) est dans la plage angulaire azimutale (121, 122, 123, 124) ne devant pas être adoptée durablement lors de l'orientation de l'axe de rotation du rotor (109) autour de l'essieu longitudinal du dispositif de socle (102).

9. Procédé selon l'une quelconque des revendications 1 à 8, comprenant :
- le calcul d'une première valeur d'une vitesse de rotation du rotor (109) par un dispositif de commande (113) ;
- la fixation au préalable d'une deuxième valeur pour la vitesse de rotation du rotor (109) par le dispositif de commande (113) ;
- la comparaison de la première valeur de la vitesse de rotation du rotor (109) et de la deuxième valeur de la vitesse de rotation du rotor (109) ;
- la modification de la vitesse de rotation du rotor (109) lorsque la première valeur de la vitesse de rotation du rotor (109) est supérieure ou égale à la deuxième valeur de la vitesse de rotation du rotor (109).

10. Procédé selon la revendication 9, comprenant :
- la modification de la vitesse de rotation du rotor (109) pour l'amener à une valeur inférieure ou égale à la deuxième valeur de la vitesse de rotation.

11. Procédé selon la revendication 10, dans lequel :
- la deuxième valeur de la vitesse de rotation correspond à la vitesse de rotation du rotor (109) dans un fonctionnement à vide.

12. Procédé selon l'une quelconque des revendications 9 à 11, comprenant :
- le réglage de la vitesse de rotation du rotor (109) en fonction d'une vitesse de vent mesurée lorsque l'axe de rotation du rotor (109) est orienté à l'extérieur de l'au moins une plage angulaire azimutale (121, 122, 123, 124) ne devant pas être adoptée durablement lors d'une orientation de l'axe de rotation autour de l'essieu longitudinal di dispositif de socle (102), après la modification de la vitesse de rotation du rotor (109).
